# EUROPÄISCHE PATENTANMELDUNG

(11) **EP 3 531 727 A1**
(43) Veröffentlichungstag der Anmeldung: **28.08.2019**
(21) Anmeldenummer: 19152136.8
(22) Anmeldetag: 16.01.2019
(51) Int. Cl.: H04W 8/00, H04W 88/06, H04W 48/14

(54) **VERFAHREN UND VORRICHTUNG ZUM ENTDECKEN EINER KOMMUNIKATIONSVERBINDUNG**

(30) Priorität: 26.02.2018 DE 102018202883
(71) Anmelder: Robert Bosch GmbH, 70442 Stuttgart (DE)
(72) Erfinder: Seiffer, Gabriela, 72581 Dettingen/ Erms (DE); Burkhardt, Stefan, 73630 Remshalden (DE); Heber, Danny, 13086 Berlin (DE); Zich, Alexander, 70469 Stuttgart (DE); Bohn, Daniel, 88142 Wasserburg (DE); Heise, Christian, 70597 Stuttgart (DE)

(57) **Zusammenfassung**

Es wird ein Verfahren und eine Vorrichtung zum Entdecken einer Kommunikationsverbindung (10) zwischen einer ersten Vorrichtung (1) mit einer zweiten Vorrichtung (2), die jeweils mindestens eine Kommunikationsvorrichtung (4) aufweisen vorgeschlagen, wobei die erste Vorrichtung (1) eine dritte Vorrichtung (3) kontaktiert und Suchinformation für den Betrieb der Kommunikationsvorrichtung (4) der ersten Vorrichtung (1) zum Suchen der zweiten Vorrichtung (2) abruft. Die erste Vorrichtung (1) betreibt dann mit den von der dritten Vorrichtung (3) erhaltenen Suchinformationen die Kommunikationsvorrichtung (4) um eine Kommunikationsverbindung zwischen der ersten und zweiten Vorrichtung (1, 2) zu entdecken.

## Beschreibung

Die Erfindung geht aus von einem Verfahren und einer Vorrichtung zum Entdecken einer Kommunikationsverbindung nach der Gattung der unabhängigen Patentansprüche. Aus der WO 2017/111833 ist bereits ein Verfahren und eine Vorrichtung zum Entdecken von Kommunikationsverbindungen bekannt, indem in einem Speicher der Vorrichtung ein Programm und Informationen zum Auffinden von Kommunikationsverbindungen mit anderen Geräten vorhanden sind. Durch Abarbeitung des Programms unter Nutzung der Informationen werden so eine Vielzahl von Kommunikationsverbindungen ermittelt.

### Stand der Technik

### Vorteile der Erfindung

Das erfindungsgemäße Verfahren nach der bzw. die erfindungsgemäße Vorrichtung mit den Merkmalen der unabhängigen Patentansprüche hat demgegenüber den Vorteil, dass das Gerät das die notwendigen Informationen zum Auffinden der Kommunikationsverbindungen nicht in der Vorrichtung selbst gespeichert sein müssen. Vielmehr können diese Informationen jeweils ermittelt werden, abgerufen werden, wenn mögliche Kommunikationsverbindungen ermittelt werden sollen. Es ist daher nicht erforderlich in der Vorrichtung selbst alle Informationen abzulegen bzw. in einer derartigen Vorrichtung auf einem aktuellen Stand zu halten. Es muss lediglich Grundinformationen vorhanden sein, die dann mit den abgerufenen Informationen ergänzt werden. Es muss daher in der jeweiligen Vorrichtung, die die Kommunikationsverbindungen entdecken will nicht alle Informationen vorrätig gehalten werden. Eine derartige Vorrichtung kann daher einfacher ausgebildet sein bzw. muss nicht kontinuierlich auf einem aktuellen Stand gehalten werden.

Weitere Vorteile und Verbesserungen ergeben sich durch die Merkmale der abhängigen Patentansprüche. Besonders einfach ist die erste Vorrichtung ausgebildet, wenn sie einen Rechner der ein Programm verarbeitet enthält und mittels eines derartigen Programms die Kommunkiationsvorrichtung ansteuert. Die Suchinformationen können dann besonders einfach für die Ansteuerung der Kommunikationsvorrichtung verwendet werden. Die Suchinformationen zum Entdecken der Kommunikationsverbindungen können besonders zielgerichtet ausgesucht werden, wenn für die Zusammenstellung der Suchinformationen weitere Informationen beispielsweise hinsichtlich der Beschreibung der Kommunikationseinrichtung oder hinsichtlich eines Typs an den gesuchten Vorrichtungen zur Verfügung gestellt werden. Es können so zielgerichtet Suchinformationen für den gewünschten Typ von Kommunikationsverbindungen zur Verfügung gestellt werden. Weiterhin kann eine zweite Vorrichtung Identifikationsinformationen zur Verfügung stellen die dann für den Aufbau einer Verbindung über die Kommunikationsverbindung genutzt werden können. Insbesondere können so auch weitere Vorrichtungen, deren Kommunikationsverbindungen nicht unmittelbar entdeckt werden können, berücksichtigt werden. Besonders sinnvoll ist das erfindungsgemäße Verfahren, wenn es bei einem Mobiltelefon mit mehreren funkbasierten Kommunikationsvorrichtungen angewendet wird. Die dritte Vorrichtung würde so einem Fall sinnvollerweise als Hintergrundrechner ausgebildet sein.

### Beschreibung der Zeichnungen

Ausführungsbeispiele der Erfindung werden in den Zeichnungen dargestellt und in der nachfolgenden Beschreibung näher erläutert.

Es zeigen:
- Figur 1: eine erste, zweite und dritte Vorrichtung,

- Figur 2: eine erste, zweite und dritte Vorrichtung und eine Vielzahl von zwischen diesen Vorrichtungen ausgetauschten Informationen und
- Figur 3: eine erste, zweite, dritte und weitere Vorrichtungen.

### Beschreibung der Erfindung

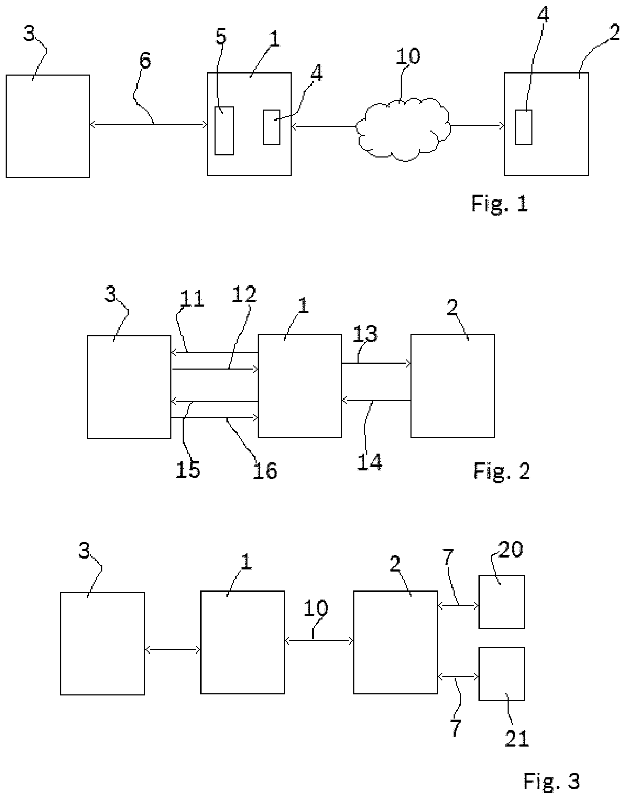

In der Figur 1 wird eine erste Vorrichtung 1 und eine zweite Vorrichtung 2 dargestellt, die jeweils eine Kommunikationsvorrichtung 4 aufweisen. Die dargestellte zweite Vorrichtung 2 steht dabei stellvertretend für eine Vielzahl derartiger zweiter Vorrichtungen 2. Für die Beschreibung der Erfindung wird insbesondere davon ausgegangen, dass die Kommunikationsvorrichtungen 4 für eine Kommunikationsverbindung 10 via Funk ausgebildet sind. Es kann sich hierbei beispielsweise um WLAN-Module oder Bluetooth-Module (incl. Bluetooth Low Energy) handeln. Weitere denkbare Funkprotokolle umfassen NFC, Zigbee, Z-Wave oder evtl. Sigfox oder sonstige Mobilfunkmodule (GSM, 4G, 5G). Für die weitere Beschreibung wird davon ausgegangen, dass die erste Vorrichtung 1 eine derartige Kommunikationsverbindung 10 zwischen der ersten Vorrichtung 1 und der zweiten Vorrichtung 2 etablieren will. Beispielsweise kann es sich bei der Vorrichtung 1 um ein Mobiltelefon handeln, welches eine Vielzahl von unterschiedlichen Kommunikationsvorrichtungen 4 beispielsweise ein WLAN-Modul oder ein Bluetooth-Modul aufweist.

Mit diesem Mobiltelefon möchte ein Benutzer in einem Haushalt eine Vielzahl von zweiten Vorrichtungen 2, mit denen verschiedene Dienste im Haus gesteuert werden kann, erreichen. Dabei kann es sich beispielsweise um verschiedene Haushaltsgeräte, eine Heizungssteuerung, verschiedene Wohnraumtemperaturventile, ein Rollladenantrieb oder weitere Vorrichtungen im Haus handeln. Aufgrund der Vielzahl an verschiedenen Geräten, die mit unterschiedlichen Verfahrensweisen angesteuert werden müssen bzw. auch unterschiedliche Funkstandards nützen, müsste in der Vorrichtung 1 eine Vielzahl von möglichen Informationen gespeichert sein, um eine effektive Kommunikation mit dieser Vielzahl von verschiedenen zweiten Vorrichtungen 2 vorzunehmen. Erfindungsgemäß wird vorgeschlagen, dass die erste Vorrichtung 1 über eine weitere Kommunikationsverbindung 6 eine dritte Vorrichtung 3 kontaktiert und von dieser dritten Vorrichtung 3 Informationen abruft, die von der ersten Vorrichtung 1 für die Suche nach den verschiedenen weiteren Vorrichtungen 2 bzw. nach Kommunikationsverbindungen 10 zu diesen Vorrichtungen 2 verwendet werden. Diese Suchinformationen sind daher nicht kontinuierlich in der ersten Vorrichtung 1 gespeichert, sondern werden von der dritten Vorrichtung 3 abgerufen wann immer die erste Vorrichtung 1 Kommunikationsverbindungen 10 zu einer zweiten Vorrichtung 2 entdecken will.

Wenn beispielsweise die erste Vorrichtung 1 als Mobiltelefon ausgebildet ist, so kann die dritte Vorrichtung 3 beispielsweise in einem Backendrechner bestehen, der eine Vielzahl von Informationen bezüglich aller möglicher weiteren zweiten Stationen 2 gespeichert enthält. Die erste Vorrichtung 1 enthält beispielsweise einen Rechner 5 der zur Abarbeitung eines Programms ausgebildet ist und insbesondere auch durch Abarbeitung eines Programms die Kommunikationsvorrichtung 4 steuert. Dabei kann eine grundlegende Software zum Ansteuern der Kommunikationsvorrichtung 4 permanent in der ersten Vorrichtung 1 gespeichert sein und die erste Vorrichtung 1 ruft nur im Bedarfsfall zusätzliche Suchinformationen von der dritten Vorrichtung 3 ab. Beispielweise wenn die Kommunikationsvorrichtung 4 der ersten Vorrichtung 1 als Bluetooth-Funkmodul ausgebildet ist, so ist eine grundlegende Software zum Ansteuern dieses Bluetooth-Funkmoduls fest bereits in dem Mobiltelefon 1 enthalten. Wenn dann durch das entsprechende Bluetooth-Funkmodul 4 in der zweiten Vorrichtung 2 gesucht werden sollen so ruft das Mobiltelefon 1 vom Backendrechner 3 entsprechende Suchinformationen zum Betreiben des Bluetooth-Moduls ab. Im Backendrechner 3 sind entsprechende Informationen zum Betreiben des Bluetooth-Moduls 4 in dem Mobiltelefon 1 enthalten und werden von dem Mobiltelefon 1 vom Backendrechner 3 abgerufen und entsprechend verwendet, um das Bluetooth-Funkmodul 4 in dem Mobiltelefon 1 zu betreiben. Das so angesteuerte Bluetooth-Funkmodul 4 des Mobiltelefons 1 sendet entsprechende Suchnachrichten an die Bluetooth-Funkmodule 4 der zweiten Vorrichtung 2, die beispielsweise als Heizkörperthermostat ausgebildet ist.

In einem ersten Schritt sollen dabei noch keine Steuerungsbefehle ausgetauscht werden, sondern es soll zunächst nur die Kommunikationsmöglichkeit oder Kommunikationsverbindung 10 zwischen dem Mobiltelefon 1 und dem Heizkörperthermostaten 2 entdeckt werden. Dies ist insbesondere dann von Bedeutung wenn eine Vielzahl von zweiten Vorrichtungen 2, beispielweise eine Vielzahl von Heizkörperthermostatventilen in Reichweite des Mobiltelefons 1 zu finden sind. Als Ergebnis dieses Entdeckungsprozesses würde dann in der Vorrichtung 1 bzw. in dem Mobiltelefon 1 eine Liste aller möglichen zweiten Stationen 2 bzw. aller Thermostatventile 2 erzeugt. Diese Liste beinhaltet dabei nur die zweiten Vorrichtungen 2, zu denen eine Kommunikationsverbindung prinzipiell möglich ist. Sie stellt noch keinen echten Kommunikationsprozess dahingehend dar, dass beispielsweise den Vorrichtungen 2 Anweisungen gegeben werden, oder aber von den Vorrichtungen 2 Messwerte eingelesen werden. Dazu muss die Kommunikationsverbindung zwischen den Vorrichtungen 1 und 2 dann noch weiter eingerichtet werden.

Je nach Art des Entdeckungsprozesses kann die Ergebnisliste unterschiedlich ausgestaltet sein. Wenn beispielweise die Vorrichtung 1 in einem völlig allgemeinen Abfrageprozess alle möglichen Bluetooth-Kommunikationsvorrichtung 4 abfragt, so werden alle zweiten Vorrichtungen 2 die ebenfalls eine Bluetooth-Kommunikationseinrichtung 4 aufweisen, als Ergebnis aufgewiesen. Obwohl beispielsweise ein Benutzer der Vorrichtung 1 bzw. des Mobiltelefon 1 nur ein Interesse an Heizkörperthermostaten hatte, werden ihm auch weitere Bluetooth-Geräte, wie beispielsweise ein Kühlschrank, eine Waschmaschine und dergleichen mitaufgelistet.

Bei einem anderen Beispiel wollte der Benutzer des Mobiltelefon 1 nur nach den Heizkörperthermostaten in seiner eigenen Wohnung suchen. Zusätzlich zu den Heizkörperthermostaten in seiner eigenen Wohnung werden ihm aber auch alle Heizkörperthermostate, beispielweise auch die einer Nachbarwohnung dargestellt. Es kann daher sinnvoll sein, den Suchprozess zur Entdeckung von Kommunikationsverbindungen 10 bereits so auszugestalten, dass nur Vorrichtungen gefunden werden, die auch im Interesse des Benutzers der Vorrichtung 1 liegen.

Details zu einem derartigen Entdeckungsprozess von Kommunikationsverbindungen 10 werden bezüglich der Figur 2 erläutert.
hier

In der Figur 2 werden wieder eine erste Vorrichtung 1, eine zweite Vorrichtung 2 stellvertretend für eine Vielzahl von zweiten Vorrichtungen 2 und eine dritte Vorrichtung 3 dargestellt. Weiterhin wird eine Vielzahl von Nachrichten die zwischen den einzelnen Vorrichtungen ausgetauscht werden, dargestellt. Zur Entdeckung der Kommunikationsverbindungen zwischen der Vorrichtung 1 und der oder den Vorrichtungen 2 sendet die Vorrichtung 1 zunächst eine Beschreibungsinformation 11 an die dritte Vorrichtung 3. Durch diese Beschreibungsinformation 11 wird beispielsweise die in der ersten Vorrichtung 1 enthaltene Kommunikationsvorrichtung 4 näher bezeichnet. Es kann so klargestellt werden, dass es sich um eine Kommunikationsvorrichtung 4 nach dem Bluetooth-Standard oder nach einem bestimmten Mobilfunkstandard handelt. Die Vorrichtung 3 bzw. der Backendrechner 3 können dann entsprechende Suchinformationen passend für diese Kommunikationsvorrichtung 4 zusammenstellen und mit einer Nachricht 12 an die Vorrichtung 1 einsenden. Alternativ kann die Beschreibungsinformation 11 auch Informationen hinsichtlich der zu suchenden Kommunikationsverbindungen bzw. der zu suchenden Vorrichtung 2 enthalten. Beispielsweise kann angegeben werden, dass nur Heizkörperthermostatventile besucht werden. Alternativ kann beispielsweise auch angegeben werden, dass nur Heizkörperthermostate eines bestimmten Anbieters gesucht werden. Auch anhand dieser Beschreibungsinformationen 11 kann dann die Station 3 entsprechende Suchinformationen zusammenstellen und an die und mit einer Nachricht 12 an die erste Station 1 senden.

Aufgrund der so erhaltenen Suchinformationen 12 erzeugt die Vorrichtung 1 eine entsprechende Abfrage zum Entdecken von Kommunikationsverbindungen 10 mit der oder den Vorrichtungen 2 und sendet eine entsprechende Suchanfrage 13 aus. Diese Suchanfrage 13 wird von der oder den Vorrichtungen 2 empfangen und die Vorrichtung oder Vorrichtungen 2 senden eine entsprechende Identifikationsinformation 14 zurück an die Vorrichtung 1. Durch eine derartige Identifikationsinformation 14 erhält die Vorrichtung 1 weitere Informationen über die zweite Vorrichtung 2 insbesondere um was für eine Art oder Typ es sich bei der Vorrichtung 2 handelt, oder aber eine individuelle Adresse durch die jede der zweiten Vorrichtungen 2 einzeln identifizierbar wird. Diese Information kann dann insbesondere dazu genutzt werden, eine Kommunikationsverbindung zwischen der ersten Vorrichtung 1 und der zweiten oder den zweiten Vorrichtungen 2 einzurichten, durch die auch Nutzdaten, insbesondere Steuer- oder Sensordaten austauschbar sind und nicht nur Nachrichten, die mit dem Einrichten einer Kommunikationsverbindung 10 zu tun haben. Wenn die Vorrichtung 1 nicht über die ausreichenden Informationen verfügt, die Identifikationsinformationen 14 vollständig selber zu verwerten, so wird sie diese mittels einer Nachricht 15 an die weitere Vorrichtung 3 weitergeben. Die Vorrichtung 3 wird dann die so übersandten Identifikationsinformationen dazu nutzen, um Betriebsinformationen 16 zu erzeugen und an die erste Vorrichtung 1 zu senden. Diese Betriebsinformationen 16 versetzen die erste Vorrichtung 1 in die Lage einer Kommunikationsverbindung 10 mit der zweiten Vorrichtung 2 einzurichten.

Die Funktion der einzelnen Elemente Vorrichtungen soll hier beispielsweise am Beispiel einer Heizungssteuerung in einer Wohnung mittels eins Mobiltelefons dargestellt werden. Der Besitzer der Wohnung möchte sein Mobiltelefon 1 verwenden, um die Heizung in seiner Wohnung zu steuern. Dazu hat er sich mit seinem Mobiltelefon 1 bereits als Besitzer der Wohnung gegenüber dem Hersteller der Heizungsteuerung identifiziert. Der Anbieter der Heizungssteuerung unterhält einen Servicerechner der als Backendrechner 3 ausgebildet ist. Zur Initialisierung der Heizungsteuerung kontaktiert der Besitzer der Wohnung mittels seines Mobiltelefons 1 den Backendrechner 3 und gibt an, dass er mit dem Mobiltelefon die Heizungssteuerung und die Heizkörperthermostaten die als zweite Vorrichtungen 2 ausgebildet sind, bedienen will. Der Backendrechner 3 des Heizsystemanbieter stellt dem Mobiltelefon 1 dann entsprechende Informationen zur Verfügung mit dem das Mobiltelefon 1 alle für die Heizungsteuerung relevanten Vorrichtungen 2 nämlich eine zentrale Heizungssteuerung und die verschiedenen Heizkörperthermostatventile entdecken kann. Als Ergebnis dieses Entdeckungsprozesses erhält das Mobiltelefon 1 dann eine Liste in der die Heizungsteuerung und die entsprechenden Heizkörperventile enthalten sind. Weiterhin stellt der Benutzer des Mobiltelefons 1 fest, dass mehr Heizkörperventile gefunden wurden, als in seiner Wohnung vorhanden sind. Weiterhin enthält diese Liste auch noch eine weitere Heizungsteuerung und weitere Heizkörperventile, die vermutlich aus einer Nachbarwohnung stammen. Diese Information wird dann von dem Mobiltelefon 1 wieder an den Backendrechner 3 gegeben. Der Backendrechner 3 kann aufgrund der Identifikationsnummern der Heizungssteuerungen und der Heizkörperventile feststellen, dass es sich um zwei unterschiedliche Heizsysteme handelt und fordert daher den Besitzer des Mobiltelefons durch eine entsprechende Nachricht auf, eine bestimmte Eingabe an der Heizungssteuerung vorzugeben. Aufgrund dieser Eingabe sendet die Heizungssteuerung und die Heizkörperventile eine entsprechende Nachricht an das Mobiltelefon 1, wodurch dann die unterschiedlichen Heizungssteuerungen und Heizkörperventile identifizierbar sind.

In der Figur 3 wird ebenfalls ein Verfahren bzw. eine Vorrichtung zum Entdecken von Kommunikationsverbindungen gezeigt, wobei die Vorrichtungen 1, 2 und 3 wieder genauso funktionieren wie zu den Figuren 1 und 2 beschrieben. Im Unterschied zu den Figuren 1 und 2 ist jedoch die Vorrichtung 2 über weitere Kommunikationsverbindungen 7 mit weiteren Vorrichtungen 20 und 21 verbunden. Zwischen der ersten Vorrichtung 1 und den weiteren Vorrichtungen 20 und 21 ist somit keine direkte Kommunikationsverbindung möglich, sondern nur vermittelt über die Vorrichtung 2. Dies kann beispielsweise dann der Fall sein, wenn die erste Vorrichtung 1 nicht zur Kommunikation mit den weiteren Vorrichtungen 20, 21 ausgebildet ist.

Dabei kann die Vorrichtung 2 auf unterschiedliche Arten ausgebildet sein. Zum einen kann die Vorrichtung 2 als einfacher Vermittler ausgebildet sein, d. h. alle Kommunikationsnachrichten von der ersten Vorrichtung 1 werden völlig ungefiltert über die Kommunikationsverbindung 10 an die weiteren Vorrichtungen 20 und 21 weitergegeben. In diesem Fall ergibt es bis auf einen Zeitversatz aus Sicht der Vorrichtung 1 keinen Unterschied.

Alternativ kann jedoch die Vorrichtung 2 so ausgebildet sein, dass sie die Nachrichten, dass die Kommunikationsverbindungen zu den weiteren Vorrichtungen 20, 21 zunächst nicht sichtbar sind, und sich daher einer Entdeckung durch die erste Vorrichtung entziehen. Erst nachdem die erste Vorrichtung 1 ihre Berechtigung zum Entdecken der weiteren Vorrichtungen 20, 21 nachgewiesen hat, würde die Vorrichtung 2 eine Entdeckung der weiteren Vorrichtungen 20 und 21 durch die erste Vorrichtung 1 zulassen. Die zweite Vorrichtung 2 würde somit eine Entdeckung der weiteren Vorrichtungen 20, 21 erst dann zulassen, wenn eine Berechtigung der ersten Vorrichtung 1 nachgewiesen ist. Auch hier könnte die dritte Vorrichtung 3 genutzt werden, um diesen Nachweis der Berechtigung der ersten Vorrichtung 3 zu ermöglichen. Beispielsweise könnte die zweite Vorrichtung 2 als Zentralsteuerung einzeln als zentrale Steuerung einer Heizung und die weiteren Vorrichtungen 20, 21 als Heizkörperthermostaten einzelner Räume ausgebildet sein. Ein Besitzer der Wohnung könnte durch sein Mobiltelefon 1 zunächst nur die Gegenwart der zentralen Heizungssteuerung 2 feststellen. Durch entsprechend das Mobiltelefon 1 würde dann einen Backendrechner des Heizungssystemsanbieter 3 des Heizungssystemshersteller kontaktieren und seine Berechtigung nachweisen oder den Benutzer von Vorrichtung 1 zur Eingabe von Benutzerdaten auffordern. Der Backendrechner 3 würde dem Mobiltelefon 1 dann entsprechende Informationen zur Verfügung stellen sich gegen mit dem sich das Mobiltelefon 1 als berechtigt zum Zugriff auf die Heizungssteuerung 2 identifiziert. Wenn so die Berechtigung des Mobiltelefons 1 nachgewiesen ist, würde die Heizungssteuerung 2 dem Mobiltelefon 1 auch noch Informationen bezüglich der Heizungsthermostaten 20, 21 zur Verfügung stellen, durch die das Mobiltelefon 1 in die Lage versetzt wird eine Kommunikationsverbindung zwischen dem Mobiltelefon 1 und dem Heizkörperthermostaten 20, 21 einzurichten. Es wird dann so eine Steuerung der einzelnen Heizkörperthermostaten 20, 21 durch das Mobiltelefon 1 ermöglicht.

## Patentansprüche

1. Verfahren zum Entdecken einer Kommunikationsverbindung (10) zwischen einer ersten Vorrichtung (1) mit einer zweiten Vorrichtung (2), die jeweils mindestens eine Kommunikationsvorrichtung (4) aufweisen, wobei die erste Vorrichtung (1) eine dritte Vorrichtung (3) kontaktiert und Suchinformation für den Betrieb der Kommunikationsvorrichtung (4) der ersten Vorrichtung (1) zum Suchen der zweiten Vorrichtung (2) abruft, dass dann die erste Vorrichtung (1) mit den von der dritten Vorrichtung (3) erhaltenen Suchinformationen die Kommunikationsvorrichtung (4) betreibt um eine Kommunikationsverbindung zwischen der ersten und zweiten Vorrichtung (1, 2) zu entdecken.

2. Verfahren nach Anspruch 1, wobei die erste Vorrichtung einen Rechner (5) der ein Programm verarbeitet enthält, dass die erste Vorrichtung die Kommunikationsvorrichtung (4) mittels eines Programms ansteuert und dass die Suchinformationen die die erste Vorrichtung (1) von der dritten Vorrichtung (3) erhalten hat für die Ansteuerung der Kommunikationsvorrichtung (4) verwendet werden.

3. Verfahren nach einem der vorhergehenden Ansprüche, wobei die erste Vorrichtung (1) der dritten Vorrichtung (3) Beschreibungsinformationen (11) zur Kommunikationseinrichtung (4) zur Verfügung stellt und die dritte Vorrichtung in Abhängigkeit von den erhaltenen Beschreibungsinformationen zur Kommunikationsvorrichtung die Suchinformation für den Betrieb der Kommunikationsvorrichtung (4) auswählt und an die erste Vorrichtung (1) sendet.

4. Verfahren nach einem der vorhergehenden Ansprüche, wobei die erste Vorrichtung (1) der dritten Vorrichtung (3) Typinformationen (11) zur zweiten Vorrichtung (2) zur Verfügung stellt und die dritte Vorrichtung (3) in Abhängigkeit von den erhaltenen Typinformationen zur zweiten Vorrichtung (2) die Suchinformation für den Betrieb der Kommunikationsvorrichtung (4) auswählt und an die erste Vorrichtung (1) sendet.

5. Verfahren nach einem der vorhergehenden Ansprüche, wobei die erste Vorrichtung von der zweiten Vorrichtung (2) Identifikationsinformation (13) erhält die eine Identifikation der zweiten Vorrichtung (2) und/oder eine Identifikation von Eigenschaften der zweiten Vorrichtung (2) ermöglichen, dass die erste Vorrichtung diese Identifikationsinformation (13) an die dritte Vorrichtung (3) übermittelt und die dritte Vorrichtung aufgrund dieser Identifikationsinformation weitere Betriebsinformationen an die erste Vorrichtung sendet, und die erste Vorrichtung die Betriebsinformationen für eine Verbindung mit der zweiten Vorrichtung verwendet.

6. Verfahren nach Anspruch 5, wobei die zweite Vorrichtung (2) an die erste Vorrichtung (1) Informationen über weitere Vorrichtung (20, 21) gibt, wobei die erste Vorrichtung die Informationen zu den weiteren Vorrichtungen (20, 21) nutzt um Kommunikationsverbindungen zwischen der ersten Vorrichtung (1) und den weiteren Vorrichtungen (20, 21) über die zweite Vorrichtung (2) zu entdeckt.

7. Verfahren nach einem der vorhergehenden Ansprüche, wobei die erste Vorrichtung (1) als Mobiltelefon mit mehreren funkbasierten Kommunikationsvorrichtungen ausgebildet ist, dass die dritte Vorrichtung (3) als Hintergrundrechner ausgebildet ist, dass das Mobiltelefon den Hintergrundrechner über eine Funkverbindung kontaktiert.

8. Vorrichtung zum Entdecken einer Kommunikationsverbindung (10) zwischen der Vorrichtung (1) und einer zweiten Vorrichtung (2), wobei die Vorrichtung und die zweite Vorrichtung jeweils eine Kommunikationsvorrichtung (4) aufweisen, wobei die erste Vorrichtung eine dritte Vorrichtung (3) kontaktiert und Suchinformation für den Betrieb der Kommunikationsvorrichtung (4) der ersten Vorrichtung zum Suchen der zweiten Vorrichtung (2) abruft, wobei die erste Vorrichtung mit den von der dritten Vorrichtung (3) erhaltenen Suchinformationen die Kommunikationsvorrichtung (4) betreibt um eine Kommunikationsverbindung (10) zur zweiten Vorrichtung zu entdecken.
